(19) **Europäisches Patentamt European Patent Office Office européen des brevets**

(11) **EP 3 640 696 B1**

(12) **EUROPEAN PATENT SPECIFICATION**

(45) Date of publication and mention
of the grant of the patent:
**09.10.2024 Bulletin 2024/41**

(21) Application number: **18835199.3**

(22) Date of filing: **16.07.2018**

(51) International Patent Classification (IPC):
***G02B 7/02*** *(2021.01)* ***G02B 9/62*** *(2006.01)*
***G02B 13/04*** *(2006.01)*

(52) Cooperative Patent Classification (CPC):
**G02B 13/04; G02B 7/028; G02B 9/62**

(86) International application number:
**PCT/CN2018/095845**

(87) International publication number:
**WO 2019/015552 (24.01.2019 Gazette 2019/04)**

(54) **OPTICAL LENS**

OPTISCHE LINSE

OBJECTIF OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.07.2017 CN 201710587523**

(43) Date of publication of application:
**22.04.2020 Bulletin 2020/17**

(73) Proprietor: **Autel Robotics Co., Ltd.
Shenzhen, Guangdong 518055 (CN)**

(72) Inventor: **HU, Chuanlun
Shenzhen
Guangdong 518055 (CN)**

(74) Representative: **Gulde & Partner
Patent- und Rechtsanwaltskanzlei mbB
Wallstraße 58/59
10179 Berlin (DE)**

(56) References cited:
**CN-A- 101 354 475    CN-A- 104 730 687
CN-A- 106 125 258    CN-A- 106 154 501
CN-U- 206 115 008    JP-A- 2014 134 563
JP-A- 2014 145 870    US-A1- 2015 177 491
US-A1- 2015 268 446    US-B1- 6 404 564**

**Description**

**BACKGROUND**

**Technical Field**

The present invention relates to optical technology, and in particular, to an optical lens.

**Related Art**

There is increasingly high demand for lenses in surveillance, vehicular equipment, aerial photography, among other fields. However, non-high-resolution lenses with less than ten megapixels are generally used in industries. A few high-pixel lenses are available and generally have excessively large volumes, inconvenient use and insufficient yields. In addition, a large quantity of glass lenses are used in conventional lenses. As a result, it still requires a lot of effort to implement lenses that have small size and light weight and are suitable for large-scale automated production.
US 2015/0268446 A1, US 2015/0177491 A1, JP 2014/145870 A and JP 2014/134563 A are directed to lens assemblies.

**SUMMARY**

The invention is defined in the claims.
Embodiments of the present invention provide an optical lens that has low cost and light weight and is suitable for large-scale automated production.
An embodiment of the present invention provides an optical lens, including:

a front lens group, configured to diverge incident light rays; and
a rear lens group, configured to converge the divergent incident light rays,
the material of the front lens group being plastic and the material of the rear lens group being plastic or glass;
the front lens group further includes a first lens and a second lens;
the rear lens group includes a third lens, a fourth lens, a fifth lens and a sixth lens; and
the first lens, the second lens, the third lens, the fourth lens, the fifth lens and the sixth lens are sequentially arranged from an object side to an image side, the material of the first lens, the second lens, the third lens, the fourth lens and the sixth lens being plastic and the material of the fifth lens being plastic or glass;
the first lens has a meniscus shape convex toward the object side, a first surface and a second surface of the first lens being both aspheric surfaces;
the second lens has a cylindrical biconvex shape, a first surface and a second surface of the second lens being both aspheric surfaces;
the third lens has a biconvex shape, a first surface and a second surface of the third lens being both aspheric surfaces;
the fourth lens has a biconcave shape, a first surface and a second surface of the fourth lens being both aspheric surfaces;
the fifth lens has a biconvex shape, a first surface and a second surface of the fifth lens being both spherical surfaces; and
the sixth lens has a concave-plane shape, a first surface of the sixth lens being an aspheric surface and a second surface of the sixth lens being a planar surface.

Optionally, the optical lens further includes:

an imaging plane;
an optical stop, located between the front lens group and the rear lens group; and
a color filter, located between the rear lens group and the imaging plane.

Optionally, the front lens group is a negative power lens group and the rear lens group is a positive power lens group.
Optionally, the sag of a free form surface of the first lens, the second lens, the third lens, the fourth lens, the fifth lens or the sixth lens meets a formula

$$Z(r) = \frac{cr^2}{1 + \sqrt{1 - (1 + k)c^2 r^2}} + Ar^4 + Br^6 + Cr^8 + Dr^{10} + Er^{12} + \cdots,$$

where Z(r) is the sag of the free form surface of the lens, r is the radius of the lens, c is the radius of curvature of the lens, k is a quadric coefficient, A is a fourth-order aspheric coefficient, B is a sixth-order aspheric coefficient, C is an eighth-order aspheric coefficient, D is a tenth-order aspheric coefficient and E is a twelfth-order aspheric coefficient.

Optionally, the optical lens meets that a through-the-lens (TTL)/effective focal length (EFFL) is less than or equal to 9, where
the TLL is an optical length of the optical lens and the EFFL is a total focal length of the optical lens.

Optionally, the optical length of the optical lens is 22 mm.

Compared with the related art, the embodiments of the present invention include a front lens group configured to diverge incident light rays and a rear lens group configured to converge the divergent incident light rays. The material of the front lens group is plastic. The material of one lens in the rear lens group is plastic or glass. The material of the remaining lenses is plastic. In the solution in the embodiments of the present invention, the optical lens is implemented by adopting a lens made of plastic. The cost of plastic is less than that of glass, the weight of plastic is less than that of glass and plastic lenses are suitable for large-scale production. Therefore, the lens that has low cost and light weight and is suitable for large-scale automated production is implemented. Moreover, when the material of one lens in the rear lens group is glass, the optical lens is less sensitive to temperature.

The first lens, the second lens, the third lens, the fourth lens and the sixth lens are implemented by aspheric lenses, so that a high-resolution lens with a large aperture and small distortion is implemented.

Other features and advantages of the present invention are described in the subsequent specification, and some of the features and advantages are apparent in the specification or may be learned through implementation of the present invention. The objectives and other advantages of the present invention may be implemented and obtained through the structures particularly mentioned in the specification, claims and the accompanying drawings.

**BRIEF DESCRIPTION OF THE DRAWINGS**

The accompanying drawings are used to help further understand the technical solutions of the present invention and constitute a part of the specification, and are used, together with embodiments of the present invention, to explain the technical solutions of the present invention, but do not constitute any limitation to the technical solutions of the present invention.

FIG. 1 is a schematic structural diagram of an optical lens not according to the claims;
FIG. 2 is a diagram showing the optical path principle of an optical lens according to an embodiment of the present invention;
FIG. 3 is a modulation transform function (MTF) resolution chart of an optical lens according to an embodiment of the present invention;
FIG. 4 is a schematic diagram of field curvature and distortion of an optical lens according to an embodiment of the present invention; and
FIG. 5 is a chromatic aberration chart of an optical lens according to an embodiment of the present invention.

**DETAILED DESCRIPTION**

For ease of understanding of the present invention, the embodiments of the present invention are described below in detail with reference to the accompanying drawings. It should be note that, provided that no conflict is caused, the embodiments in this application or the features in the embodiments may be combined together.

The steps shown in the flowchart of the accompanying drawings may be performed in, for example, a computer system having a set of computer executable instructions. In addition, although a logical order is shown in the flowchart, in some cases, shown or described steps may be performed in an order different from the order shown herein.

It should be noted that when an element is described as "fixed" to another element, the element may be directly located on the another element, or there may be one or more intervening elements between the element and the another element. When an element is described as "connected" to another element, the element may be directly connected to the another element, or there may be one or more intervening elements between the element and the another element. Directions or position relationships indicated by the terms "up", "down", "inside", "outside", "bottom" and the like used in the specification are based on the directions or position relationships shown in the accompanying drawings, and are merely intended to describe the present invention and simplify the descriptions, but are not intended to indicate or imply that an apparatus or an element shall have a specific direction or be formed and operated in a specific direction, and therefore shall not be understood as a limitation on the present invention. In addition, the terms such as "first", "second" and "third" are used only for the purpose of description, and should not be understood as indicating or implying the relative importance.

Unless otherwise defined, meanings of all technical and scientific terms used in this specification are the same as those usually understood by a person skilled in the technical field to which the present invention belongs. Terms used in the specification of the present invention are merely intended to describe objectives of the specific embodiments, but are not intended to limit the present invention. The term "and/or" used in this specification includes any or all combinations of one or more related listed items.

An embodiment of the present invention provides an optical lens, including:

a front lens group configured to diverge incident light rays and a rear lens group configured to converge the divergent incident light rays,
where the material of the front lens group is plastic, the material of one lens in the rear lens group is plastic or glass and the material of the remaining lenses is plastic.

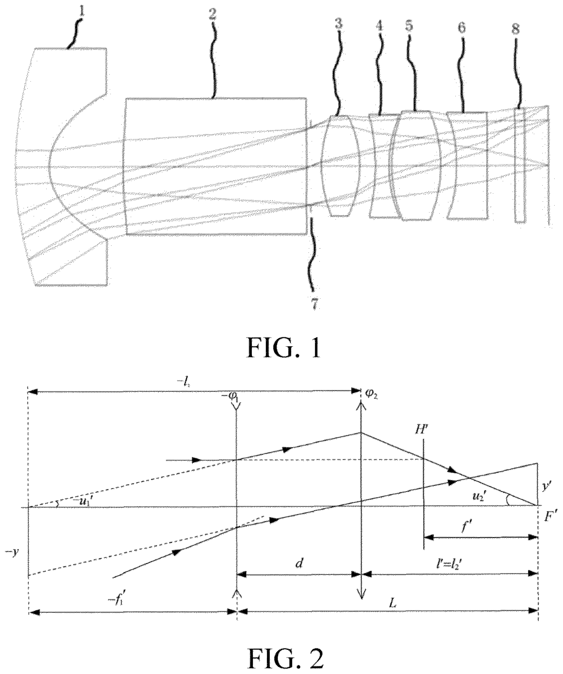

Referring to FIG. 1 that discloses an optical lens not according to the claims, the front lens group further includes a first lens 1 and a second lens 2.

The rear lens group includes a third lens 3, a fourth lens 4, a fifth lens 5 and a sixth lens 6.

The first lens 1, the second lens 2, the third lens 3, the fourth lens 4, the fifth lens 5 and the sixth lens 6 are sequentially arranged from an object side to an image side. The material of the first lens 1, the second lens 2, the third lens 3, the fourth lens 4 and the sixth lens 6 are plastic. The material of the fifth lens 5 is plastic or glass.

In the foregoing optical lens, as shown in FIG. 2, the front lens group is a negative power lens group. To receive as many light rays as possible, an arched meniscus lens can be adopted in the front lens group. The rear lens group is a positive power lens group.

The power of the front lens group is $-\varphi_1$ and the power of the rear lens group is $\varphi_2$. A light beam on an object side is diverged by the front lens group and is then converged by the rear lens group at the focus F' of the rear lens group. That is, after an off-axis light ray of the optical lens is diverged by the front lens group, a tilt angle of the light ray passing through the rear lens group significantly decreases. The rear lens group has a smaller field of view (FOV), which facilitates aberration correction of the rear lens group. The front lens group has a larger FOV.

The total power of the optical lens obtained according to an ideal optical system theory is:

$$\varphi = \varphi 1 + \varphi 2 + d\varphi 1 \varphi 2,$$

where $\Phi$ is the vertical power of the optical lens and d is a distance between the front lens group and the rear lens group.

A rear working distance of the optical lens is:

$$l' = \frac{f_2'\left(d - f_1'\right)}{f' - d - f_2'},$$

where l' is the rear working distance, f' is the total focal length of the optical lens, $f_1'$ is the focal length of the front lens group and $f_2'$ is the focal length of the rear lens group.

Therefore,

$$f_1' = \frac{-f'}{l' - f'}d \quad \text{and} \quad f_2' = \frac{\left(l' - f'\right)\left(f' - d\right)}{l' - f' + d}d.$$

Optionally, the foregoing optical lens further includes:

an optical stop 7 located between the front lens group and the rear lens group and an optical stop color filter 8 located between the rear lens group and an imaging plane.

In the foregoing optical lens, the first lens 1, the second lens 2, the third lens 3, the fourth lens 4 and the sixth lens 6 are all aspheric lenses.

The first lens 1 has a meniscus shape convex toward the object side, a first surface and a second surface of the first lens 1 being both aspheric surfaces.

The second lens 2 has a cylindrical biconvex shape, a first surface and a second surface of the second lens 2 being both aspheric surfaces.

The third lens 3 has a biconvex shape, a first surface and a second surface of the third lens 3 being both aspheric surfaces.

The fourth lens 4 has a biconcave shape, a first surface and a second surface of the fourth lens 4 being both aspheric surfaces.

The fifth lens 5 has a biconvex shape, a first surface and a second surface of the fifth lens 5 being both spherical surfaces.

The sixth lens 6 has a concave-plane shape, a first surface of the sixth lens 6 being an aspheric surface and a second surface of the sixth lens 6 being a planar surface.

In the foregoing description, the first surfaces are all surfaces near the object side and the second surfaces are all surfaces near the image side.

Optionally, the sag of a free form surface of the first lens 1, the second lens 2, the third lens 3, the fourth lens 4, the fifth lens 5 or the sixth lens 6 meets a formula

$$Z(r) = \frac{cr^2}{1 + \sqrt{1 - (1+k)c^2 r^2}} + Ar^4 + Br^6 + Cr^8 + Dr^{10} + Er^{12} + \cdots,$$

where Z(r) is the sag of the free form surface of the first lens 1, the second lens 2, the third lens 3, the fourth lens 4, the fifth lens 5 or the sixth lens 6, r is the radius of the first lens 1, the second lens 2, the third lens 3, the fourth lens 4, the fifth lens 5 or the sixth lens 6, c is the radius of curvature of the lens, k is a quadric coefficient, A is a fourth-order aspheric coefficient, B is a sixth-order aspheric coefficient, C is an eighth-order aspheric coefficient, D is a tenth-order aspheric coefficient, E is a twelfth-order aspheric coefficient and ... Generally, the eighth-order aspheric coefficient may be reached.

The aspheric coefficient may be obtained by using the following method:
initializing the aspheric coefficient of each order, calculating a parameter (for example, one or more of an MTF, field curvature and distortion) that needs to be optimized in advance, changing the aspheric coefficient of each order, and continuously calculating the parameter that needs to be optimized until an optimal value of the parameter that needs to be optimized is obtained. If two or more parameters need to be optimized, weights of the parameters that need to be optimized may be set.

For example, in the foregoing formula, for the first surface of the first lens 1, c is 13.07044 mm, k is -2.274595, A is -0.00011509207, B is $-1.9295315\times e^{-6}$, C is $9.4621482\times e^{-8}$ and the remaining aspheric coefficients are 0.

For the second surface of the first lens 1, c is 2.193243 mm, k is -0.9403449, A is 0.0020738786, B is $9.3077682\times e^{-5}$, C is $2.5098018\times e^{-6}$ and the remaining aspheric coefficients are 0.

For the first surface of the second lens 2, c is 13.07044 mm, k is -2.274595, A is -0.00011509207, B is $-1.9295315\times e^{-6}$, C is $9.4621482\times e^{-8}$ and the remaining aspheric coefficients are 0.

For the second surface of the second lens 2, c is -56.91064 mm, k is -134.8245, A is -0.0025149791, B is 0.00083334482, C is $-3.7348112\times e^{-6}$ and the remaining aspheric coefficients are 0.

For the first surface of the third lens 3, c is 4.628216 mm, k is -3.147746, A is -0.00011509207, B is $-1.9295315\times e^{-6}$, C is $9.4621482\times e^{-8}$ and the remaining aspheric coefficients are 0.

For the second surface of the third lens 3, c is -4.677102 mm, k is -0.07343802, A is -0.0028690442, B is 0.00067782909, C is $-2.7120176\times e^{-5}$ and the remaining aspheric coefficients are 0.

For the first surface of the fourth lens 4, c is -7.706641 mm, k is -24.52216, A is -0.002088073, B is 0.00037088085, C is -0.00014458901 and the remaining aspheric coefficients are 0.

For the second surface of the fourth lens 4, c is 5.936748 mm, k is -0.1128624, A is 0.0057414348, B is -0.00086019015, C is $2.3738499\times e^{-5}$ and the remaining aspheric coefficients are 0.

For the first surface of the fifth lens 5, c is 5.769723 mm and k is 0.

For the second surface of the fifth lens 5, c is -5.769723 mm and k is 0.

For the first surface of the sixth lens 6, c is -9.088463mm, k is -15.44647, A is -0.010697193, B is 0.00031461388, C is $3.3574156\times e^{-5}$ and the remaining aspheric coefficients are 0.

For the second surface of the sixth lens 6, c is 96.31016 mm, k is 1421.828, A is -0.0030668462, B is 0.0001010034, C is $4.1311493\times e^{-5}$ and the remaining aspheric coefficients are 0.

The specific parameters of the lenses in FIG. 1 are shown in Table 1.

Table 1 Parameters of the lenses

| Lens | Surface | Type | Radius of curvature, r | Thickness | Refractive index | Abbe value | Diameter | Aspheric coefficient k |
|---|---|---|---|---|---|---|---|---|
| Object plane | | Planar surface (STANDARD) | Infinity | Infinity | 0 | 0 | | |
| First lens 1 | First surface | Curved surface EVENASPH | 13.07044 | 1.398775 | 1.534611 | 56.072148 | 10.20171 | -2.274595 |
| | Second surface | EVENASPH | 2.193243 | 3.036252 | | | 6.141243 | -0.9403449 |
| Second lens 2 | First surface | EVENASPH | 16.81273 | 7.58988 | 1.61422 | 25.576511 | 5.772172 | -9.283708 |
| | Second surface | EVENASPH | -56.91064 | 0.1682803 | | | 3.284177 | -134.8245 |
| Optical stop 7 | | STANDARD | Infinity | 0.4351824 | | | 3.173613 | 0 |
| Third lens 3 | First surface | EVENASPH | 4.628216 | 1.5769 | 1.534611 | 56.072148 | 3.983265 | -3.147746 |
| | Second surface | EVENASPH | -4.677102 | 0.6481644 | | | 4.177887 | -0.07343802 |
| Fourth lens 4 | First surface | EVENASPH | -7.706641 | 0.5749177 | 1.61422 | 25.576511 | 4.096807 | -24.52216 |
| | Second surface | EVENASPH | 5.936748 | 0.1060703 | | | 4.344672 | -0.1128624 |
| Fifth lens 5 | First surface | STANDARD | 5.769723 | 2.016637 | 1.693501 | 53.205325 | 4.436169 | 0 |
| | Second surface | STANDARD | -5.769723 | 0.6488539 | | | 4.59295 | 0 |
| Sixth lens 6 | First surface | EVENASPH | -9.088463 | 1.258637 | 1.61422 | 25.576511 | 4.320643 | -15.44647 |
| | Second surface | EVENASPH | 96.31016 | 1.16297 | | | 4.532626 | 1421.828 |
| Optical filter 8 | First surface | STANDARD | Infinity | 0.4 | 1.5231 | 54.490071 | 4.84077 | 0 |
| | Second surface | STANDARD | Infinity | 0.9874848 | | | 4.909933 | 0 |
| Imaging plane | | STANDARD | Infinity | | | | 5.196662 | |

An optical length TTL of the foregoing optical lenses is 22 mm. A total focal length EFFL is 2.77 mm. TTL/EFFL ≤ 9 is met. Therefore, an f-number FNO of the optical lenses is 2 and a vertical FOV angle is 86°.

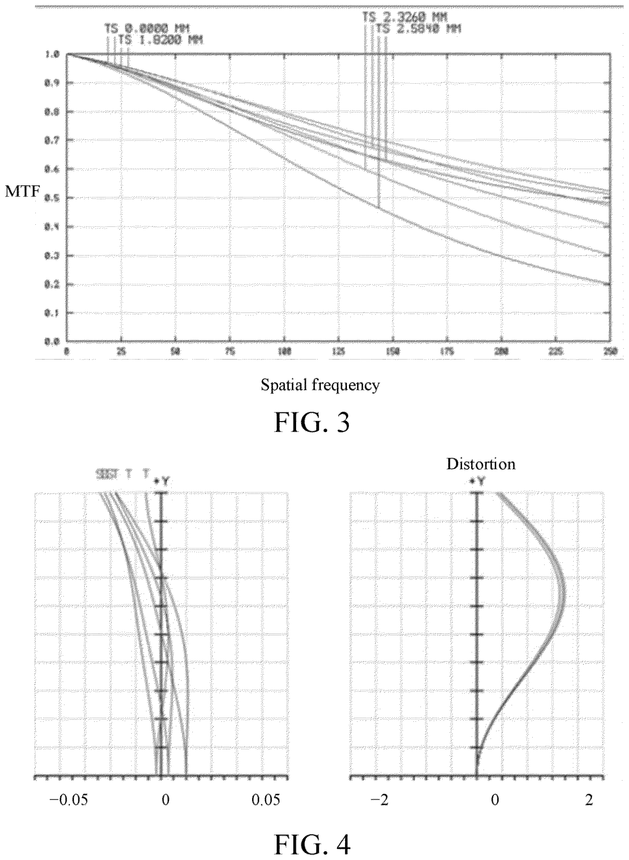

FIG. 3 is an MTF resolution chart of an optical lens. The MTF is a method for describing a degree of truth of an object pattern to an image (a main advantage of using the MTF to describe a resolution is that a product of multiplying MTFs of imaging components is equal to an MTF of an entire system) and is equivalent to a spatial frequency response (SFR). Common units of spatial frequency include LW/PH (a line width/an image height, and is equivalent to a quantity of lines per image height) and LP/PH (a line pair/an image height), lp/mm (lp represents a pair of black and white lines at equal intervals), and the like. As shown in FIG. 3, the horizontal coordinate is spatial frequency and the vertical coordinate is an MTF value. In the figure, TS 0.0000 mm represents an MTF value of a meridian and an MTF value of a sagittal surface when the image height is 0 mm. TS 1.8200 mm represents an MTF value of the meridian and an MTF value of the sagittal surface when the image height is 1.82 mm. TS 2.3260 mm represents an MTF value of the meridian and an MTF value of the sagittal surface when the image height is 2.326 mm. TS 2.5840 mm represents an MTF value of the meridian and an MTF value of the sagittal surface when the image height is 2.584 mm. T is the meridian and S is a sagittal line. It may be learned from the figure that, when the spatial frequency is 250 lp/mm (lp represents a pair of black and white lines at equal intervals), the MTF value of the center field (that is, the image height is 0 mm) is 47%. When the spatial frequency is 250 lp/mm (lp represents a pair of black and white lines at equal intervals), the MTF value of the 0.9 field (that is, the image height is 2.326 mm) is 30%, which has a high resolution and meets 4K resolution.

FIG. 4 is a schematic diagram of field curvature and distortion of an optical lens. In the figure, the schematic diagram of field curvature is provided on the left and the schematic diagram of distortion is provided on the right. Curves in the figures are curves of field curvature and distortion of a meridian and a sagittal surface with different colors. The horizontal coordinates are the value of field curvature and the value of distortion, and the vertical coordinate is an image height. It can be seen from the figure that, the maximum value of field curvature is 0.025 mm and the maximum value of distortion is 1.4%. The field curvature is small and distortion is low in resolution.

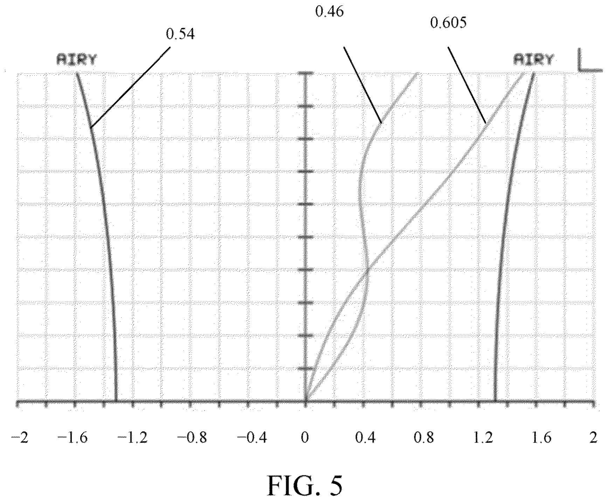

FIG. 5 is a chromatic aberration chart of an optical lens. In the figure, the horizontal coordinate is the value of chromatic aberration and the vertical coordinate is an image height. The figure provides curves of chromatic aberration when a wavelength is 0.46 nm (that is, blue light), 0.54 nm (that is, green light) and 0.605 nm (that is, red light). It can be seen from the figure that the maximum value of chromatic aberration is 1.6 $\mu$m. It indicates that the optical lens has excessively small chromatic aberration.

Although the disclosed implementations of the present invention are described above, the content is merely implementations used for ease of understanding the present invention, and is not intended to limit the present invention. A person skilled in the art of the present invention may make any modification and change to implementation forms and details without departing from the scope disclosed in the present invention. However, the patent protection scope of the present invention is still subject to the scope defined by the appended claims.

## Claims

1. An optical lens, comprising:

    a front lens group (1, 2), configured to diverge incident light rays; and
    a rear lens group (3, 4, 5, 6), configured to converge the divergent incident light rays,
    the material of the front lens group being plastic and the material of the rear lens group being plastic or glass;
    wherein the front lens group comprises a first lens (1) and a second lens (2);
    the rear lens group comprises a third lens (3), a fourth lens (4), a fifth lens (5) and a sixth lens (6); and
    the first lens (1), the second lens (2), the third lens (3), the fourth lens (4), the fifth lens (5) and the sixth lens (6) are sequentially arranged from an object side to an image side, the material of the first lens (1), the second lens (2), the third lens (3), the fourth lens (4) and the sixth lens (6) being plastic and the material of the fifth lens (5) being plastic or glass;
    **characterized in that**
    the first lens (1) has a meniscus shape convex toward the object side, a first surface and a second surface of the first lens being both aspheric surfaces;
    the second lens (2) has a cylindrical biconvex shape, a first surface and a second surface of the second lens being both aspheric surfaces;
    the third lens (3) has a biconvex shape, a first surface and a second surface of the third lens being both aspheric surfaces;
    the fourth lens (4) has a biconcave shape, a first surface and a second surface of the fourth lens being both aspheric surfaces;
    the fifth lens (5) has a biconvex shape, a first surface and a second surface of the fifth lens being both spherical surfaces; and
the sixth lens (6) has a concave-plane shape, a first surface of the sixth lens being an aspheric surface and a second surface of the sixth lens being a planar surface.

2. The optical lens according to claim 1, further comprising:

an imaging plane;
an optical stop (7), located between the front lens group and the rear lens group; and
a color filter (8), located between the rear lens group and the imaging plane.

3. The optical lens according to claim 1 or 2, wherein the front lens group is a negative power lens group and the rear lens group is a positive power lens group.

4. The optical lens according to claim 1, wherein the sag of a free form surface of the first lens (1), the second lens (2), the third lens (3), the fourth lens (4), the fifth lens (5) or the sixth lens (6) meets a formula,

$$Z(r) = \frac{cr^2}{1 + \sqrt{1 - (1 + k)c^2r^2}} + Ar^4 + Br^6 + Cr^8 + Dr^{10} + Er^{12} + \cdots$$

wherein Z(r) is the sag of the free form surface of the lens, r is the radius of the lens, c is the radius of curvature of the lens, k is a quadric coefficient, A is a fourth-order aspheric coefficient, B is a sixth-order aspheric coefficient, C is an eighth-order aspheric coefficient, D is a tenth-order aspheric coefficient and E is a twelfth-order aspheric coefficient.

5. The optical lens according to claim 1, wherein the optical lens meets that a through-the-lens (TTL)/effective focal length (EFFL) is less than or equal to 9; and the TLL is an optical length of the optical lens and the EFFL is a total focal length of the optical lens.

6. The optical lens according to claim 5, wherein the optical length of the optical lens is 22 mm.


**Patentansprüche**

1. Optische Linse, umfassend:

eine vordere Linsengruppe (1, 2), die dazu ausgestaltet ist, einfallende Lichtstrahlen zu zerstreuen; und
eine hintere Linsengruppe (3, 4, 5, 6), die dazu ausgestaltet ist, die divergierenden einfallenden Lichtstrahlen zu sammeln,
wobei das Material der vorderen Linsengruppe Kunststoff ist und das Material der hinteren Linsengruppe Kunststoff oder Glas ist;
wobei die vordere Linsengruppe eine erste Linse (1) und eine zweite Linse (2) umfasst;
die hintere Linsengruppe eine dritte Linse (3), eine vierte Linse (4), eine fünfte Linse (5) und eine sechste Linse (6) umfasst; und
die erste Linse (1), die zweite Linse (2), die dritte Linse (3), die vierte Linse (4), die fünfte Linse (5) und die sechste Linse (6) aufeinanderfolgend von einer Objektseite zu einer Bildseite angeordnet sind, das Material der erste Linse (1), der zweiten Linse (2), der dritten Linse (3), der vierten Linse (4) und der sechsten Linse (6) Kunststoff ist und das Material der fünften Linse (5) Kunststoff oder Glas ist;
**dadurch gekennzeichnet, dass**
die erste Linse (1) eine Meniskusform aufweist, die hin zur Objektseite konvex ist, wobei eine erste Oberfläche und eine zweite Oberfläche der ersten Linse beide asphärische Oberflächen sind;
die zweite Linse (2) eine zylindrische bikonvexe Form aufweist, wobei eine erste Oberfläche und eine zweite Oberfläche der zweiten Linse beide asphärische Oberflächen sind;
die dritte Linse (3) eine bikonvexe Form aufweist, wobei eine erste Oberfläche und eine zweite Oberfläche der dritten Linse beide asphärische Oberflächen sind;
die vierte Linse (4) eine bikonkave Form aufweist, wobei eine erste Oberfläche und eine zweite Oberfläche der vierten Linse beide asphärische Oberflächen sind;

die fünfte Linse (5) eine bikonvexe Form aufweist, wobei eine erste Oberfläche und eine zweite Oberfläche der fünften Linse beide sphärische Oberflächen sind; und

die sechste Linse (6) eine konkave/plane Form aufweist, wobei eine erste Oberfläche der sechsten Linse eine asphärische Oberfläche ist und eine zweite Oberfläche der sechsten Linse eine plane Oberfläche ist.

2. Optische Linse nach Anspruch 1, ferner umfassend:

eine Bildebene;
eine optische Sperre (7), die sich zwischen der vorderen Linsengruppe und der hinteren Linsengruppe befindet; und
einen Farbfilter (8), der sich zwischen der hinteren Linsengruppe und der Bildebene befindet.

3. Optische Linse nach Anspruch 1 oder 2, wobei die vordere Linsengruppe eine Zerstreuungslinsengruppe ist und die hintere Linsengruppe eine Sammellinsengruppe ist.

4. Optische Linse nach Anspruch 1, wobei die Durchbiegung einer Freiformfläche der ersten Linse (1), der zweiten Linse (2), der dritten Linse (3), der vierten Linse (4), der fünften Linse (5) oder der sechsten Linse (6) einer Formel entspricht,

$$Z(r) = \frac{cr^2}{1 + \sqrt{1 - (1 + k)c^2r^2}} + Ar^4 + Br^6 + Cr^8 + Dr^{10} + Er^{12} + \cdots$$

wobei Z(r) die Durchbiegung der Freiformfläche der Linse ist, r der Radius der Linse ist, c der Krümmungsradius der Linse ist, k ein quadratischer Koeffizient ist, A ein asphärischer Koeffizient vierter Ordnung ist, B ein asphärischer Koeffizient sechster Ordnung ist, C ein asphärischer Koeffizient achter Ordnung ist, D ein asphärischer Koeffizient zehnter Ordnung ist und E ein asphärischer Koeffizient zwölfter Ordnung ist.

5. Optische Linse nach Anspruch 1, wobei bezüglich der optischen Linse zutrifft, dass ein Maß durch die Linse hindurch (*through the lens* - TTL)/effektive Brennweite (*effective focal length* - EFFL) kleiner als oder gleich 9 ist; und das TLL eine optische Länge der optischen Linse ist und die EFFL eine Gesamtbrennweite der optischen Linse ist.

6. Optische Linse nach Anspruch 5, wobei die optische Länge der optischen Linse 22 mm beträgt.


**Revendications**

1. Objectif optique, comprenant :

un groupe de lentilles avant (1, 2), configuré pour faire diverger des rayons de lumière incidente ; et
un groupe de lentilles arrière (3, 4, 5, 6), configuré pour faire converger les rayons de lumière incidente divergents ;
le matériau du groupe de lentilles avant étant en plastique et le matériau du groupe de lentilles arrière étant en plastique ou en verre ;
dans lequel le groupe de lentilles avant comprend une première lentille (1) et une deuxième lentille (2) ;
le groupe de lentilles arrière comprend une troisième lentille (3), une quatrième lentille (4), une cinquième lentille (5) et une sixième lentille (6) ; et
la première lentille (1), la deuxième lentille (2), la troisième lentille (3), la quatrième lentille (4), la cinquième lentille (5) et la sixième lentille (6) sont agencées de manière séquentielle depuis le côté d'objet vers le côté d'image, le matériau de la première lentille (1), de la deuxième lentille (2), de la troisième lentille (3), de la quatrième lentille (4) et de la sixième lentille (6) étant en plastique et le matériau de la cinquième lentille (5) étant en plastique ou en verre ;
**caractérisé en ce que**
la première lentille (1) a une forme de ménisque convexe vers le côté d'objet, une première surface et une seconde surface de la première lentille étant toutes deux des surfaces asphériques ;
la deuxième lentille (2) a une forme biconvexe cylindrique, une première surface et une seconde surface de la deuxième lentille étant toutes deux des surfaces asphériques ;

la troisième lentille (3) a une forme biconvexe, une première surface et une seconde surface de la troisième lentille étant toutes deux des surfaces asphériques ;

la quatrième lentille (4) a une forme biconcave, une première surface et une seconde surface de la quatrième lentille étant toutes deux des surfaces asphériques ;

la cinquième lentille (5) a une forme biconvexe, une première surface et une seconde surface de la cinquième lentille étant toutes deux des surfaces sphériques ; et

la sixième lentille (6) a une forme de plan concave, une première surface de la sixième lentille étant une surface asphérique et une seconde surface de la sixième lentille étant une surface plane.

2. Objectif optique selon la revendication 1, comprenant en outre :

un plan d'imagerie ;

une butée optique (7), située entre le groupe de lentilles avant et le groupe de lentilles arrière ; et

un filtre coloré (8), situé entre le groupe de lentilles arrière et le plan d'imagerie.

3. Objectif optique selon la revendication 1 ou 2, dans lequel le groupe de lentilles avant est un groupe de lentilles de puissance négative et le groupe de lentilles arrière est un groupe de lentilles de puissance positive.

4. Objectif optique selon la revendication 1, dans lequel l'affaissement d'une surface de forme libre de la première lentille (1), de la deuxième lentille (2), de la troisième lentille (3), de la quatrième lentille (4), de la cinquième lentille (5) ou de la sixième lentille (6) répond à une formule,

$$Z(r) = \frac{cr^2}{1 + \sqrt{1 - (1+k)c^2 r^2}} + Ar^4 + Br^6 + Cr^8 + Dr^{10} + Er^{12} + \cdots \; ,$$

où Z(r) est l'affaissement de la surface de forme libre de la lentille, r est le rayon de la lentille, c est le rayon de courbure de la lentille, k est un coefficient quadrique, A est un coefficient asphérique de quatrième ordre, B est un coefficient asphérique de sixième ordre, C est un coefficient asphérique de huitième ordre, D est un coefficient asphérique de dixième ordre et E est un coefficient asphérique de douzième ordre.

5. Objectif optique selon la revendication 1, dans lequel l'objectif optique répond à la condition qu'une longueur focale à travers la lentille (*through the lens* - TTL) / longueur focale effective (*effective focal length* - EFFL) est inférieure ou égale à 9 ; et

la TLL est une longueur optique de l'objectif optique et la EFFL est une longueur focale totale de l'objectif optique.

6. Objectif optique selon la revendication 5, dans lequel la longueur optique de l'objectif optique est de 22 mm.

FIG. 1

FIG. 2

Spatial frequency

FIG. 3

Distortion

−0.05            0            0.05            −2            0            2

FIG. 4

FIG. 5

**EP 3 640 696 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150268446 A1
- US 20150177491 A1
- JP 2014145870 A
- JP 2014134563 A